# EUROPÄISCHE PATENTSCHRIFT

(11) **EP 2 565 580 B1**
(45) Veröffentlichungstag und Bekanntmachung des Hinweises auf die Patenterteilung: **17.08.2016**
(21) Anmeldenummer: 12181516.1
(22) Anmeldetag: 23.08.2012
(51) Int. Cl.: G01B 21/02, G01S 15/02, G01S 15/93

(54) **Verfahren zur Bestimmung eines Ausmaßes eines Objekts in einer Umgebung eines Fahrzeugs sowie eine entsprechende Vorrichtung und ein Fahrzeug mit einer derartigen Vorrichtung**
Method for determining the dimensions of an object in the vicinity of a vehicle, corresponding device and vehicle with such a device
Procédé de détermination d'une dimension d'un objet dans un environnement d'un véhicule ainsi que dispositif correspondant et véhicule avec un tel dispositif

(30) Priorität: 01.09.2011 DE 102011112150
(43) Veröffentlichungstag der Anmeldung: 06.03.2013
(73) Patentinhaber: Valeo Schalter und Sensoren GmbH, 74321 Bietigheim-Bissingen (DE)
(72) Erfinder: Heimberger, Markus, 74354 Besigheim (DE); Gotzig, Heinrich, 71665 Vaihingen a. d. Enz (DE)

(56) Entgegenhaltungen:
- WO-A1-2010/133946
- DE-A1-102009 000 401
- DE-A1-102010 049 216
- US-B2- 7 042 389
- US-B2- 7 432 848

## Beschreibung

Die Erfindung betrifft ein Verfahren zur Bestimmung eines Ausmaßes eines Objekts in einer Umgebung eines Fahrzeugs, bei welchem das Objekt einerseits mit einer Abstandssensoreinrichtung und des Weiteren mit einer optischen Erfassungseinrichtung erfasst wird und abhängig von den erfassten Objektinformationen der Einrichtungen das Ausmaß des Objekts bestimmt wird. Die Erfindung betrifft darüber hinaus auch eine Vorrichtung, insbesondere auch eine Fahrerassistenzvorrichtung sowie ein Fahrzeug mit einer derartigen Vorrichtung.

Es ist bekannt, dass Fahrzeuge mit einer Ultraschallsensorvorrichtung ausgestattet sind, die mehrere Ultraschallsensoren umfasst. Mittels diesen wird die Umgebung des Fahrzeugs erfasst und Objekte erkannt. Problem dabei ist es, dass mittels den Ultraschallsensoren die Objektausmaße und somit die Objektausdehnung, vor allem die Höhe, nur sehr grob ermittelbar ist, da nicht bekannt ist, ob alle Schallreflexionen tatsächlich den Objektumriss erfassen. Es lässt sich allerdings bestimmen, wo sich das Objekt befindet.

Darüber hinaus ist es bekannt, dass in Fahrzeugen optische Erfassungseinrichtungen in Form von Kameras installiert sind, die ebenfalls zur Umgebungsdetektion angeordnet sind. Mittels einer derartigen Kamera ist die Detektion jedoch dahingehend eingeschränkt, zu erkennen, ob es sich bei einem detektierten Objekt um ein dreidimensionales Gebilde, wie beispielsweise eine Stange handelt, oder ob dies lediglich ein im Wesentlichen zweidimensionales Objekt, beispielsweise eine Linie auf dem Boden, ist. Allerdings kann mit einer Kamera die Kontur eines Objekts relativ genau erfasst werden. Ein weiteres Problem bei der Kameradetektion besteht darin, dass es sehr schwierig ist, die exakte Position eines Objekts relativ zum Fahrzeug zu bestimmen.

Aus der WO 2005/033735 ist es bekannt, dass mittels Ultraschallsensoren runde Objekte wie beispielsweise Rohre oder Pfosten oder aber auch geradlinige Objekte, wie Wände, unterschieden bzw. klassifiziert werden können. Darüber hinaus kann lokalisiert werden, wo sich dieses Objekt, also deren x-y-Position bezogen auf einen Fixpunkt zum Fahrzeug, der beispielsweise eine Hinterachse des Fahrzeugs sein kann, befindet, und ob es sich um ein hohes oder niedriges Objekt handelt.

Darüber hinaus ist aus der DE 10 2009 000 401 A1 ein Verfahren und eine Vorrichtung zum Vermeiden einer Kollision zwischen einem Fahrzeug und einem Objekt bekannt. Dort ist ein Fahrzeug sowohl mit einer Ultraschallsensoreinrichtung als auch mit einer optischen Erfassungseinrichtung ausgerüstet. Beide detektieren Objektinformationen, die mittels einer zusätzlichen Korrelierungseinrichtung korreliert werden. Dadurch soll eine Objektplausibilisierung und eine Fusion der Objektinformationen erreicht werden. Allerdings ist auch hier die Präzision im Hinblick auf die Ausmaßbestimmung und zusätzlich der lokalen Position eines Objekts weiterhin eingeschränkt.

Aus der DE 10 2010 049 216 ist ein Verfahren zum Betrieb einer an einem Fahrzeug angeordneten Kamera bekannt. Mittels der Kamera wird ein Bild einer Umgebung des Fahrzeugs aufgenommen und mittels einer Bildauswertung des aufgenommenen Bildes ein Objekt in der Umgebung des Fahrzeugs detektiert. Mittels zumindest einer am Fahrzeug angeordneten Sensoreinheit wird das Objekt in der Umgebung des Fahrzeugs detektiert und eine Entfernung zu dem Objekt ermittelt.

Es ist Aufgabe der vorliegenden Erfindung, ein Verfahren sowie eine Vorrichtung zur Bestimmung eines Ausmaßes eines Objekts in einer Umgebung eines Fahrzeugs zu schaffen, mittels welchem bzw. mittels welcher diese Ausmaßbestimmung präzisiert ist.

Diese Aufgabe wird durch ein Verfahren und eine Vorrichtung und ein Fahrzeug gemäß den unabhängigen Ansprüchen gelöst.

Bei einem erfindungsgemäßen Verfahren zur Bestimmung eines Ausmaßes eines Objekts in einer Umgebung eines Fahrzeugs wird das Objekt einerseits mit einer Abstandssensoreinrichtung bzw. Abstandsmessvorrichtung und des Weiteren mit einer dazu separaten optischen Erfassungseinrichtung erfasst. Abhängig von den jeweils erfassten Objektinformationen der Einrichtungen wird das Ausmaß des Objekts bestimmt. Es wird mit der Abstandssensoreinrichtung als Objektinformation ein horizontaler Abstand in einer Längeneinheit zu einer ersten Objektstelle bestimmt. Abhängig von diesem Abstand und einer Relativlage zwischen den beiden Einrichtungen wird das Objekt in einem von der optischen Erfassungseinrichtung aufgenommenem Bild örtlich identifiziert und abhängig von der Bildinformation wird ein Abstand der optischen Erfassungseinrichtung zum Objekt in Bildpunkten ermittelt. Durch die redundante Erfassung des Objekts durch zwei verschiedene Einrichtungen, mittels welchen einerseits, nämlich mit der Abstandssensoreinrichtung, ein Abstand beispielsweise in Zentimeter sehr genau bestimmt werden kann und andererseits mit einer weiteren Einrichtung, nämlich der optischen Erfassungseinrichtung die Kontur des Objekts sehr genau erfasst werden kann, kann in Kombination dieser Informationen die Lage und das Ausmaß eines Objekts sehr präzise bestimmt werden. Dies wird in dem Zusammenhang auf Basis von trigonometrischen Gegebenheiten ermittelt, da einerseits der Abstand zwischen der Abstandssensoreinrichtung am Fahrzeug und der optischen Erfassungseinrichtung am Fahrzeug bekannt und abgespeichert ist. Insbesondere sind diese örtlichen Positionen zu einem Fixpunkt am Fahrzeug, der beispielsweise die Hinterachse des Fahrzeugs sein kann, definiert. Mittels dieser Vorgehensweise ist es somit auch äußerst präzise möglich, in dem Bild, welches von der optischen Erfassungseinrichtung erfasst wurde, einen exakten Abstand zu bestimmen, der dann jedoch aufbauend auf den Informationen der Abstandssensoreinrichtung und den Bildinformationen zunächst als Information in Bildpunkten vorliegt.

Vorzugsweise wird vorgesehen, dass der in Bildpunkten bestimmte Abstand zwischen der optischen Erfassungseinrichtung und dem Objekt im Bezug zur ersten Objektstelle bestimmt wird. Gerade dann, wenn ein Objekt eine Höhe aufweist, die größer als der Abstand der Abstandssensoreinrichtung vom Boden ist und somit die Bestimmung des horizontalen Abstands zwischen der Abstandssensoreinrichtung und dem Objekt ermöglicht ist, da die Signale in horizontaler Richtung nicht über das Objekt hinweg laufen, ist die oben genannte Vorgehensweise besonders vorteilhaft.

Da gerade in diesem Zusammenhang dann ein Dreieckverhältnis zwischen der ersten Objektstelle, der optischen Erfassungseinrichtung und der Abstandssensoreinrichtung vorliegt, kann auf Basis von einfachen trigonometrischen Zusammenhängen dann auch dieser Abstand in Bildpunkten bestimmt werden.

Vorzugsweise wird vorgesehen, dass der Abstand zwischen der optischen Erfassungseinrichtung und der ersten Objektstelle abhängig von dem horizontalen Abstand und den in einer Längeneinheit abgespeicherten Abstand zwischen der optischen Erfassungseinrichtung und der Abstandssensoreinrichtung in einer Längeneinheit berechnet wird. Auch hier kann somit insbesondere in zusätzlicher Vorgehensweise auf Basis der trigonometrischen Zusammenhänge der Abstand auch in einer Längeneinheit berechnet werden. In besonders vorteilhafter Weise liegt somit der Abstand zwischen der ersten Objektstelle und der optischen Erfassungseinrichtung sowohl als Bildpunktinformation als auch als Längeneinheitinformation vor.

Als Längeneinheit kann beispielsweise die Maßeinheit Zentimeter oder Meter zugrunde gelegt werden. Als Alternative kann auch vorgesehen sein, dass beispielsweise Inch oder dergleichen zugrunde gelegt werden.

Die jeweils von den einzelnen Einrichtungen gelieferten vorteilhaften Informationen werden somit in intelligenter Weise für den jeweiligen Verfahrensschritt derart genutzt, dass zur Weiterverarbeitung wesentliche und nützliche Informationen generiert werden. So können, wie bereits erläutert, aus den Bildinformationen der optischen Erfassungseinrichtung präzise Informationen auf Basis von Bildpunkten ermittelt werden, wobei hingegen aus den Informationen der Abstandssensoreinrichtung präzise Informationen auf Basis von Längeneinheiten bereitgestellt werden. Da, wie bereits einleitend erläutert, sowohl die optische Erfassungseinrichtung als auch die Abstandssensoreinrichtung ihre individuellen Vor- und Nachteile aufweisen, kann durch diese Vorgehensweise eine besonders hervorzuhebende Kombination der jeweiligen Vorteile dieser Informationen der einzelnen Einrichtungen erzielt werden. Dies führt zu einer besonders präzisen Bestimmung und Aussage über die Lage und insbesondere das Ausmaß eines Objekts in der Umgebung eines Fahrzeugs.

Vorzugsweise wird aus dem in Bildpunkten des Bildes ermittelten Abstand zwischen der optischen Erfassungseinrichtung und der ersten Objektstelle und dem in einer Längeneinheit berechneten Abstand zwischen der optischen Erfassungseinrichtung und der ersten Objektstelle ein Umrechnungsfaktor zwischen Bildpunkten und einer Längeneinheit bestimmt. Dies liefert in besonders hervorzuhebender Weise dann eine Möglichkeit, die Bildinformationen der optischen Erfassungseinrichtung und die Informationen der Abstandssensoreinrichtung in einfacher Weise jeweils in das andere System umzurechnen und quasi zu transferieren. Die Bestimmung eines derartigen Umrechnungsfaktors stellt damit den wesentlichen Schlüssel dar, um jeweils gewonnene Informationen einer Einrichtung präzise und kompatibel auf die Informationen der anderen Einrichtung übertragen zu können. Da einerseits die Informationen quasi in Bildpunkten vorliegen und andererseits die Informationen in Längeneinheiten vorliegen, kann durch den Umrechnungsfaktor quasi auch ein Vergleichs- und Kompatibilitätsfaktor bereitgestellt werden.

Vorzugsweise wird vorgesehen, dass zumindest ein weiterer Abstand zwischen der optischen Erfassungseinrichtung und einer zur ersten unterschiedlichen zweiten Objektstelle aus den Bildinformationen in Bildpunkten bestimmt wird. Eine derartige Abstandsbestimmung zu einer zweiten Objektstelle ermöglicht dann im Nachgang in sehr einfacher und dennoch sehr präziser Weise eine Ausmaßbestimmung, insbesondere eine Höhe, des Objekts leichter zu ermitteln.

Vorzugsweise wird vorgesehen, dass die zweite Objektstelle höher oder niedriger liegt als die erste Objektstelle, insbesondere das obere Ende oder das untere Ende des Objekts darstellt. Dadurch kann eine besonders präzise Ausgangsbasis zur Bestimmung der Höhe des Objekts ermöglicht werden.

Vorzugsweise wird vorgesehen, dass eine zweite Objektstelle das obere Ende des Objekts und das eine dritte Objektstelle das untere Ende des Objekts darstellt und aus den Bildinformationen der optischen Erfassungseinrichtung sowohl der Abstand zwischen der optischen Erfassungseinrichtung und der zweiten Objektstelle in Bildpunkten als auch der Abstand zwischen der optischen Erfassungseinrichtung und der dritten Objektstelle in Bildpunkten bestimmt wird. Die oben genannten Vorteile werden dadurch nochmals begünstigt.

Vorzugsweise wird vorgesehen, dass mittels dem Umrechnungsfaktor der Abstand zwischen der optischen Erfassungseinrichtung und der zweiten Objektstelle und der Abstand zwischen der optischen Erfassungseinrichtung und der dritten Objektstelle jeweils in Längeneinheiten umgerechnet wird. Dadurch kann in besonders einfacher und präziser Weise eine Information in Längeneinheiten gewonnen werden, die allein aus der Abstandssensoreinrichtung nicht generierbar sind. Da die Bildinformationen im Hinblick auf diese Abstandsbestimmungen sehr präzise sind, jedoch nur in Bildpunkten vorliegen, wird nunmehr durch den Umrechnungsfaktor eine sehr präzise Aussage über die Abstände in Längeneinheiten ermöglicht.

Vorzugsweise wird abhängig von diesen in Längeneinheiten bestimmten Abständen die Höhe und/oder die Breite als Ausmaß des Objekts bestimmt. In besonders vorteilhafter Weise kann somit durch das Verfahren einerseits die Lage des Objekts relativ zum Fahrzeug als auch die Ausmaße, insbesondere die Höhe, des Objekts bestimmt werden.

Insbesondere kann als Objekt ein säulenförmiger Gegenstand, wie beispielsweise ein Pfosten, ein Baum, ein Rohr, oder dergleichen erfasst werden. Es können jedoch auch dadurch andere Gegenstände wie beispielsweise Stangen oder dergleichen detektiert werden.

Vorzugsweise ist die Abstandssensorvorrichtung eine Ultraschallsensorvorrichtung mit zumindest einem Ultraschallsensor. Es kann der Abstand jedoch auch mit einer Radarsensorvorrichtung oder einer Lasersensorvorrichtung oder einer Infrarotsensorvorrichtung bestimmt werden.

Des Weiteren betrifft die Erfindung eine Vorrichtung, insbesondere eine Fahrerassistenzvorrichtung, für ein Fahrzeug, welche zur Durchführung eines erfindungsgemäßen Verfahrens oder einer vorteilhaften Ausführung davon ausgebildet ist. Die Vorrichtung umfasst eine Abstandssensoreinrichtung mit zumindest einem Abstandsmesssensor, und eine optische Erfassungseinrichtung, beispielsweise eine Kamera, wobei beide Einrichtungen zur Erfassung von Objekten in der Fahrzeugumgebung ausgebildet sind. Die Vorrichtung umfasst darüber hinaus eine Auswerte- und Steuereinheit, mit welcher die Bildinformationen der optischen Erfassungseinrichtung und die Informationen der Abstandssensoreinrichtung auswertbar sind.

Vorteilhafte Ausführungen des erfindungsgemäßen Verfahrens sind als vorteilhafte Ausführungen der Vorrichtung anzusehen. Insbesondere die Auswerte- und Steuereinheit ist dabei dazu ausgebildet, die entsprechenden Abläufe durchzuführen, insbesondere auszuwerten und zu steuern.

Des Weiteren betrifft die Erfindung ein Fahrzeug, insbesondere ein Kraftfahrzeug, mit einer Vorrichtung gemäß der Erfindung oder einer vorteilhaften Ausgestaltung davon. Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ein Ausführungsbeispiel der Erfindung wird nachfolgend anhand schematischer Zeichnungen näher erläutert. Es zeigen:
- Fig. 1: eine Draufsicht auf ein Ausführungsbeispiel eines erfindungsgemäßen Fahrzeugs mit einer Ausführung einer erfindungsgemäßen Vorrichtung; und
- Fig. 2: eine Seitenansicht der Darstellung gemäß Fig. 1.

In den Figuren werden gleiche oder funktionsgleiche Elemente mit den gleichen Bezugszeichen versehen.

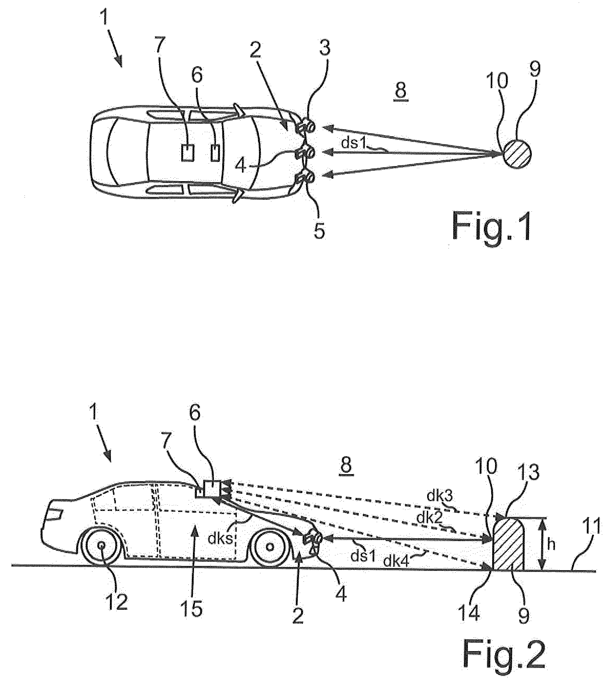

In der vereinfachten Draufsichtdarstellung in Fig. 1 ist ein Fahrzeug 1 gezeigt, welches ein Personenkraftwagen ist.

Das Fahrzeug 1 umfasst eine als Ultraschallsensoreinrichtung 2 ausgebildete Abstandsmessvorrichtung bzw. Abstandssensoreinrichtung, die eine Mehrzahl von Ultraschallsensoren aufweist. Beispielhaft sind hier lediglich drei Ultraschallsensoren 3, 4 und 5 gezeigt, die in einem Stoßfänger des Fahrzeugs 1 frontseitig angeordnet sind.

Darüber hinaus umfasst das Fahrzeug 1 eine optische Erfassungseinrichtung 6, die eine Kamera ist. Die Kamera kann insbesondere im für den Menschen sichtbaren Spektralbereich sensitiv sein.

Darüber hinaus umfasst das Fahrzeug 1 eine Auswerte- und Steuereinheit 7, die mit der Ultraschallsensorvorrichtung 2 und auch der optischen Erfassungseinrichtung 6 verbunden ist und zum entsprechenden Signal- und Datenaustausch ausgebildet ist.

Sowohl die optische Erfassungseinrichtung 6 als auch die Ultraschallsensoren 3 bis 5 sind zur Detektion einer Fahrzeugumgebung 8 ausgebildet und entsprechend angeordnet. Die Komponenten sind insbesondere einer Fahrerassistenzvorrichtung 15 (Fig. 2) zugehörig, wie beispielsweise einer Parkassistenzvorrichtung, die zum zumindest semi-autonomen Durchführen eines Parkvorgangs ausgebildet ist.

Die Ultraschallsensoren 3 bis 5 generieren dabei Informationen, die einen Abstand in einer Längeneinheit, beispielsweise in Zentimeter, zu einem Objekt 9 in der Fahrzeugumgebung 8 darstellen.

Die optische Erfassungseinrichtung 6 hingegen detektiert Bildinformationen und nimmt somit Bilder auf. Die darin enthaltenen Informationen werden in Bildpunkten angegeben, sodass Abstände von Objekten in dem Bild in Bildpunkten bemessen sind.

In der in Fig. 1 dargestellten Draufsicht ist vorgesehen, dass der mittlere Ultraschallsensor 4 das Objekt 9 direkt auf der Sensorachse mit einem Abstand ds1 und in einer Längeneinheit, beispielsweise in Zentimetern, erfasst.

Des Weiteren kann bestimmt werden, dass es sich um ein hohes Objekt handelt, welches die Sensorachse übersteigt. Eine derartige Vorgehensweise ist aus der bereits genannten WO 2005/033735 A1 bekannt.

Darüber hinaus kann durch die Mehrzahl der Ultraschallsensoren 3 bis 5 auch detektiert werden, dass es sich um ein relativ dünnes, im Horizontalquerschnitt rundes Objekt handelt, da alle radialen Abstände der Ultraschallsensoren 3 bis 5 sich im Wesentlichen in einem Punkt oder in einem Punkt, nämlich einer ersten Objektstelle 10 des Objekts 9 schneiden.

In Fig. 2 ist eine Seitenansicht des Szenarios in Fig. 1 gezeigt. Das Fahrzeug 1, welches sich auf einer Fahrbahn 11 befindet, auf der auch das Objekt 9 ortsfest angeordnet ist, kann sich relativ zum Objekt 9 bewegen oder auch stehen.

Wie bereits erwähnt, wird auch durch die optische Erfassungseinrichtung 6 die Umgebung des Fahrzeugs 1 erfasst und ein entsprechendes Bild generiert. Mit den durch die Ultraschallsensoren 3 bis 5 generierbaren Informationen, wie sie bereits zu Fig. 1 erläutert wurden, wird nun dieses Objekt 9 in dem Bild, welches von der optischen Erfassungseinrichtung 6 aufgenommen wurde, gesucht. Bei der optischen Erfassungseinrichtung 6 ist es dabei bekannt, dass beispielsweise durch die Auswerte- und Steuereinheit 7 mitgeteilt oder von dieser ausgewertet wird, dass das Objekt 9 auf der Sensorachse der Ultraschallsensoren 3 bis 5, insbesondere des Ultraschallsensors 4 detektiert wurde.

Darüber hinaus ist in der Auswerte- und Steuereinheit 7 abgespeichert, wie die Lage der optischen Erfassungseinrichtung 6 relativ zur Ultraschallsensorvorrichtung 2 und insbesondere den Ultraschallsensoren 3 bis 5, die allesamt ortsfest am Fahrzeug 1 angeordnet sind, ist. Insbesondere sind diese Lagen relativ zu einem Fixpunkt des Fahrzeugs 1, insbesondere zu einer Hinterachse 12, angegeben und abgespeichert. Dadurch ist auch ein Abstand dks zwischen der optischen Erfassungseinrichtung 6 und insbesondere auch dem Ultraschallsensor 4 bekannt. Dieser ist einer Längeneinheit, beispielsweise in Zentimeter, bekannt und abgespeichert.

Wie bereits zu Fig. 1 erläutert, wird mittels der Ultraschallsensoreinrichtung 2 als Objektinformation ein horizontaler Abstand ds1 in einer Längeneinheit zu der ersten Objektstelle 10 des Objekts 9 bestimmt. Abhängig von diesem Abstand ds1 und der erläuterten Relativlage zwischen der optischen Erfassungseinrichtung 6 und beispielsweise dem Ultraschallsensor 4, insbesondere charakterisiert durch den Abstand dks, kann das Objekt 9 in dem von der optischen Erfassungseinrichtung 6 aufgenommen Bild örtlich in dem Bild identifiziert werden. Abhängig von der Bildinformation wird dann ein Abstand der optischen Erfassungseinrichtung 6 zum Objekt 9 in Bildpunkten ermittelt. Dabei wird insbesondere ein Abstand dk2 zwischen der optischen Erfassungseinrichtung 6 und der ersten Objektstelle 10 in Bildpunkten ermittelt. Insbesondere ist somit die Information über diesen Abstand dk2 in Pixel bekannt.

Über die mathematische Beziehung eines Dreiecks, beispielsweise den Kosinussatz, lässt sich der Abstand dk2 auch in einer Längeneinheit berechnen, da sowohl die Abstände ds1 als auch der Abstand dks in Längeneinheiten, insbesondere in Zentimetern, bekannt sind.

Der Abstand dk2 liegt somit sowohl als Längeneinheitinformation als auch als Bildpunktinformation vor.

Damit wird nun ein Umrechnungsfaktor zwischen Bildpunkten und einer Längeneinheit bestimmt.

Auf Basis dieses Umrechnungsfaktors kann dann auch ein Abstand dk3 zwischen der optischen Erfassungseinrichtung 6 und einer zweiten Objektstelle 13 des Objekts 9 in einer Längeneinheit bestimmt werden. Die zweite Objektstelle 13 stellt das obere Ende des Objekts 9 und somit den höchsten Punkt des Objekts 9 dar. Da der Abstand dk3 auf Basis der Bildinformationen, die durch die optische Erfassungseinrichtung 6 detektiert wurden, in Bildpunkten sehr genau ermittelbar ist und entsprechend vorliegt, kann nun wiederum über den sehr präzisen Umrechnungsfaktor der Abstand dk3 in Längeneinheiten berechnet bzw. bestimmt werden.

Entsprechendes kann auch mit einem weiteren Abstand dk4 zwischen der optischen Erfassungseinrichtung 6 und einer dritten Objektstelle 14 durchgeführt werden. Die dritte Objektstelle 14 stellt das untere Ende des Objekts 9 dar, welches somit am Boden bzw. auf der Fahrbahn 11 sich befindet.

Auch hier ist eine sehr genaue Information über den Abstand dk4 aus den Bildinformationen der optischen Erfassungseinrichtung 6 in Bildpunkten vorliegend. Durch den präzisen Umrechnungsfaktor kann dann auch einfach und äußerst genau dieser Abstand dk4 in Längeneinheiten umgerechnet werden.

Indem nun die Abstände dk3 und dk4 in Längeneinheiten äußerst genau bekannt sind, kann dann in einfacher Weise durch trigonometrische Beziehungen eine Höhe h des Objekts 9 berechnet werden. Das Ausmaß des Objekts 9 kann somit sehr exakt in Längeneinheiten angegeben werden. Da auch die Lage des Objekts 9 relativ zum Fahrzeug 1 sehr präzise bestimmt werden kann, werden äußerst genaue Informationen zur Lage und zum Ausmaß des Objekts 9 generiert, die dann der Fahrerassistenzvorrichtung 15 des Fahrzeugs 1 zur Verfügung gestellt werden können.

## Patentansprüche

1. Verfahren zur Bestimmung eines Ausmaßes eines Objekts (9) in einer Umgebung (8) eines Fahrzeugs (1), bei welchem das Objekt (9) einerseits mit einer Abstandssensoreinrichtung (2) und des Weiteren mit einer optischen Erfassungseinrichtung (6) erfasst wird und abhängig von den erfassten Objektinformationen der Einrichtungen (2, 6) das Ausmaß des Objekts (9) bestimmt wird, mit der Abstandssensoreinrichtung (2) als Objektinformation ein horizontaler Abstand (ds1) in einer Längeneinheit zu einer ersten Objektstelle (10) bestimmt wird und abhängig von diesem Abstand (ds1) und einer Relativlage zwischen den beiden Einrichtungen (2, 6) das Objekt (9) in einem von der optischen Erfassungseinrichtung (6) aufgenommenen Bild örtlich identifiziert wird und abhängig von der Bildinformation ein Abstand (dk2) der optischen Erfassungseinrichtung (6) zum Objekt (9) in Bildpunkten ermittelt wird
**dadurch gekennzeichnet, dass**
zumindest ein weiterer Abstand (dk3, dk4) zwischen der optischen Erfassungseinrichtung (6) und einer zur ersten unterschiedlichen zweiten Objektstelle (13, 14) aus den Bildinformationen in Bildpunkten bestimmt wird, wobei aus dem in Bildpunkten des Bildes ermittelten Abstand (dk2) zwischen der optischen Erfassungseinrichtung (6) und der ersten Objektstelle (10) und dem in einer Längeneinheit berechneten Abstand (dk2) zwischen der optischen Erfassungseinrichtung (6) und der ersten Objektstelle (10) ein Umrechnungsfaktor zwischen Bildpunkten und einer Längeneinheit bestimmt wird, mittels dem Umrechnungsfaktor der Abstand (dk3) zwischen der optischen Erfassungseinrichtung (6) und der zweiten Objektstelle (13) und der Abstand (dk4) zwischen der optischen Erfassungseinrichtung (6) und der dritten Objektstelle (14) jeweils in Längeneinheiten umgerechnet wird und abhängig von den Abständen (dk3, dk4) in Längeneinheiten die Höhe (h) und/oder Breite als Ausmaß des Objekts (9) bestimmt wird.

2. Verfahren nach Anspruch 1,
**dadurch gekennzeichnet, dass**
der in Bildpunkten bestimmte Abstand (dk2) zwischen der optischen Erfassungseinrichtung (6) und dem Objekt (9) in Bezug zur ersten Objektstelle (10) bestimmt wird.

3. Verfahren nach Anspruch 1 oder 2,
**dadurch gekennzeichnet, dass**
der Abstand (dk2) zwischen der optischen Erfassungseinrichtung (6) und der ersten Objektstelle (10) abhängig von dem horizontalen Abstand (ds1) und dem in einer Längeneinheit abgespeicherten Abstand (dks) zwischen der optischen Erfassungseinrichtung (6) und der Abstandssensoreinrichtung (2) in einer Längeneinheit berechnet wird.

4. Verfahren nach Anspruch nach einem der vorhergehenden Ansprüche,
**dadurch gekennzeichnet, dass**
die zweite Objektstelle (13, 14) höher oder niedriger liegt als die erste Objektstelle (10), insbesondere das obere Ende oder das untere Ende des Objekts (9) darstellt.

5. Verfahren nach Anspruch 4,
**dadurch gekennzeichnet, dass**
eine zweite Objektstelle (13) das obere Ende des Objekts (9) und eine dritte Objektstelle (14) das untere Ende des Objekts (9) darstellt und aus den Bildinformationen sowohl der Abstand (dk3) zwischen der optischen Erfassungseinrichtung (6) und der zweiten Objektstelle (13) in Bildpunkten als auch der Abstand (dk4) zwischen der optischen Erfassungseinrichtung (6) und der dritten Objektstelle (14) in Bildpunkten bestimmt wird.

6. Verfahren nach einem der vorhergehenden Ansprüche,
**dadurch gekennzeichnet, dass**
als Objekt (9) ein säulenförmiger Gegenstand erfasst wird.

7. Verfahren nach einem der vorhergehenden Ansprüche,
**dadurch gekennzeichnet, dass** als Abstandssensoreinrichtung eine Ultraschallsensoreinrichtung (2) verwendet wird.

8. Vorrichtung, insbesondere Fahrerassistenzvorrichtung (15), für ein Fahrzeug (1), welche zur Durchführung eines Verfahrens nach einem der vorhergehenden Ansprüche ausgebildet ist und eine Abstandssensoreinrichtung (2) mit zumindest einem Ultraschallsensor (3 bis 5), und eine optische Erfassungseinrichtung (6) umfasst, wobei beide Einrichtungen (2, 6) zur Erfassung von Objekten (9) in der Fahrzeugumgebung (8) ausgebildet sind, und eine Auswerte- und Steuereinheit (7) ausgebildet ist, mit welcher die Bildinformationen der optischen Erfassungseinrichtung (6) und die Informationen der Abstandssensoreinrichtung (2) auswertbar sind.

9. Fahrzeug (1) mit einer Vorrichtung nach Anspruch 8.

## Claims

1. Method for determining a dimension of an object (9) in an environment (8) of a vehicle (1), in which the object (9) is captured with a distance sensor device (2) and furthermore with an optical capturing device (6) and, in dependence on the captured object information from the devices (2, 6), the dimension of the object (9) is determined, a horizontal distance (ds1) to a first object location (10) is determined in a unit of length as the object information using the distance sensor device (2) and, in dependence on this distance (ds1) and a relative position between the two devices (2, 6), the object (9) is locally identified in an image recorded by the optical capturing device (6) and, in dependence on the image information, a distance (dk2) of the optical capturing device (6) to the object (9) is determined in pixels,
**characterized in that**
at least one further distance (dk3, dk4) between the optical capturing device (6) and a second object location (13, 14), which differs from the first one, is determined in pixels from the image information, wherein a conversion factor between pixels and a unit of length is determined from the distance (dk2), ascertained in pixels of the image, between the optical capturing device (6) and the first object location (10) and the distance (dk2), calculated in a unit of length, between the optical capturing device (6) and the first object location (10), with which conversion factor the distance (dk3) between the optical capturing device (6) and the second object location (13) and the distance (dk4) between the optical capturing device (6) and the third object location (14) are in each case converted into units of length and, in dependence on the distances (dk3, dk4) in units of length, the height (h) and/or width is determined as the dimension of the object (9).

2. Method according to Claim 1,
**characterized in that**
the distance (dk2), determined in pixels, between the optical capturing device (6) and the object (9) is determined with respect to the first object location (10).

3. Method according to Claim 1 or 2,
**characterized in that**
the distance (dk2) between the optical capturing device (6) and the first object location (10) is calculated, in dependence on the horizontal distance (ds1) and the distance (dks), which is stored in a unit of length, between the optical capturing device (6) and the distance sensor device (2) in a unit of length.

4. Method according to one of the preceding claims,
**characterized in that**
the second object location (13, 14) is located higher or lower than the first object location (10), in particular represents the upper end or the lower end of the object (9).

5. Method according to Claim 4,
**characterized in that**
a second object location (13) represents the upper end of the object (9) and a third object location (14) represents the lower end of the object (9) and, from the image information, both the distance (dk3) between the optical capturing device (6) and the second object location (13) is determined in pixels and also the distance (dk4) between the optical capturing device (6) and the third object location (14) is determined in pixels.

6. Method according to one of the preceding claims,
**characterized in that**
a pillar-type object is captured as the object (9).

7. Method according to one of the preceding claims,
**characterized in that**
an ultrasound sensor device (2) is used as the distance sensor device.

8. Apparatus, in particular a driver assistance apparatus (15), for a vehicle (1), which is configured for carrying out a method according to one of the preceding claims and comprises a distance sensor device (2) having at least one ultrasound sensor (3 to 5), and an optical capturing device (6), wherein both devices (2, 6) are configured for capturing objects (9) in the vehicle environment (8), and an evaluation and control unit (7) is configured, with which the image information from the optical capturing device (6) and the information from the distance sensor device (2) can be evaluated.

9. Vehicle (1) having an apparatus according to Claim 8.

## Revendications

1. Procédé de détermination d'une dimension d'un objet (9) dans un environnement (8) d'un véhicule (1), dans lequel l'objet (9) est détecté d'une part au moyen d'un dispositif de détection de distance (2) et d'autre part, au moyen d'un dispositif de détection optique (6) et la dimension de l'objet (9) est déterminée en fonction des informations d'objet détectées par les dispositifs (2, 6), une distance horizontale (ds1) est déterminée dans une unité de longueur par rapport à un premier point d'objet (10) au moyen du dispositif de détection de distance (2) en tant qu'information d'objet et l'objet (9) est identifié spatialement en fonction de ladite distance (ds1) et d'une position relative entre les deux dispositifs (2, 6) dans une image acquise par le dispositif de détection optique (6) et une distance (dk2) entre le dispositif de détection (6) et l'objet (9) est déterminée en points d'image en fonction de l'information d'image, **caractérisé en ce qu'**au moins une autre distance (dk3, dk4) entre le dispositif de détection optique (6) et un deuxième point d'objet (13, 14) différent du premier est déterminée en points d'image à partir des informations d'image, dans lequel un facteur de conversion entre les points d'image et une unité de longueur est déterminé à partir de la distance (dk2) déterminée en points d'image de l'image entre le dispositif de détection optique (6) et le premier point d'objet (10) et de la distance (dk2) calculée dans une unité de longueur entre le dispositif de détection optique (6) et le premier point d'objet (10), la distance (dk3) entre le dispositif de détection otique (6) et le deuxième point d'objet (13) et la distance (dk4) entre le dispositif de détection otique (6) et le troisième point d'objet (14) est respectivement convertie en des unités de longueur au moyen du facteur de conversion et la hauteur (h) et/ou la largeur est/sont déterminée(s) en tant que dimension de l'objet (9) en fonction des distances (dk3, dk4) en unités de longueur.

2. Procédé selon la revendication 1,
**caractérisé en ce que** la distance (dk2) déterminée en points d'image entre le dispositif de détection optique (6) et l'objet (9) est déterminée par rapport à un premier point d'objet (10).

3. Procédé selon la revendication 1 ou 2,
**caractérisé en ce que** la distance (dk2) entre le dispositif de détection optique (6) et le premier point d'objet (10) est calculée dans une unité de longueur en fonction de la distance horizontale (ds1) et de la distance (dks) mémorisée dans une unité de longueur entre le dispositif de détection optique (6) et le dispositif de détection de distance (2).

4. Procédé selon l'une quelconque des revendications précédentes,
**caractérisé en ce que** la deuxième position d'objet (13, 14) se situe plus haut ou plus bas que le premier point d'objet (10), et représente notamment l'extrémité supérieure ou l'extrémité inférieure de l'objet (9).

5. Procédé selon la revendication 4,
**caractérisé en ce qu'**un deuxième point d'objet (13) représente l'extrémité supérieure de l'objet (9) et **en ce qu'**un troisième point d'objet (14) représente l'extrémité inférieure de l'objet (9) et la distance (dk3) entre le dispositif de détection optique (6) et le deuxième point d'objet (13) en points d'image ainsi que la distance (dk4) entre le dispositif de détection optique (6) et le troisième point d'objet (14) en points d'image sont déterminées à partir des informations d'image.

6. Procédé selon l'une quelconque des revendications précédentes,
**caractérisé en ce qu'**un objet en forme de colonne est détecté en tant qu'objet (9).

7. Procédé selon l'une quelconque des revendications précédentes,
**caractérisé en ce qu'**un dispositif de détection à ultrasons (2) est utilisé en tant que dispositif de détection de distance.

8. Dispositif, notamment dispositif d'assistance à la conduite (15), destiné à un véhicule (1), qui est conçu pour mettre en oeuvre un procédé selon l'une quelconque des revendications précédentes et qui comprend un dispositif de détection de distance (2) comportant au moins un capteur à ultrasons (3 à 5), et un dispositif de détection optique (6), dans lequel les deux dispositifs (2, 6) sont conçus pour détecter des objets (9) dans l'environnement (8) du véhicule, et une unité d'évaluation et de commande (7) est réalisée pour évaluer les informations d'image du dispositif de détection optique (6) et les informations du dispositif de détection de distance (2).

9. Véhicule (1) comportant un dispositif selon la revendication 8.
